# EUROPÄISCHE PATENTSCHRIFT

(11) **EP 1 182 529 B1**
(45) Veröffentlichungstag und Bekanntmachung des Hinweises auf die Patenterteilung: **03.05.2006**
(21) Anmeldenummer: 01117885.2
(22) Anmeldetag: 23.07.2001
(51) Int. Cl.: G05B 19/418, G05B 19/042

(54) **Industrielle Steuerung auf der Basis Technologischer Objekte**
Industrial control based on distributed technological objects
Commande industrielle basée sur des objets technologiques distribués

(30) Priorität: 03.08.2000 DE 10037971; 03.08.2000 DE 10037990; 08.11.2000 DE 10055168; 08.11.2000 DE 10055169
(43) Veröffentlichungstag der Anmeldung: 27.02.2002
(73) Patentinhaber: SIEMENS AKTIENGESELLSCHAFT, 80333 München (DE)
(72) Erfinder: Birzer, Johannes, 92551 Stulln (DE); Heber, Tino, Dr., 09599 Freiberg (DE); Horn, Wolfgang, Dr., 09337 Hohenstein-Ernstthal (DE); Kiesel, Martin, 91099 Poxdorf (DE); Kram, Raimund, 91056 Erlangen (DE)

(56) Entgegenhaltungen:
- DE-A- 19 853 205
- US-A- 5 453 933
- US-A- 5 844 804

## Beschreibung

Die Erfindung bezieht sich auf eine industrielle Steuerung für technische Prozesse, insbesondere für Produktionsmaschinen.

Ferner bezieht sich die Erfindung auf ein Verfahren zur Erstellung einer industriellen Steuerung, insbesondere für ein bestimmtes Einsatzgebiet, z.B. Einsatz bei Verpackungsmaschinen.

Eine industrielle Steuerung kann dabei ein eigenes Gerät sein, sie kann aber auch in einen Computer, einem PC, einem eigenständigen Gerät oder einem Antrieb integriert sein.

Bisher bekannte industrielle Steuerungen zur Automatisierung technischer Prozesse basieren im Wesentlichen entweder auf einer "SPS-Funktionalität", einer "MC-Funktionalität" oder auf einer Technologiefunktionalität. Da im Rahmen solcher Funktionalitäten ein gewisser Funktionsumfang fest vorgeschrieben ist, ist eine optimale Anpassung an die Anforderungen eines speziellen Prozesses häufig nur bedingt möglich, wobei im konkreten Anwendungsfall oft eine ganze Gruppe von Funktionen überflüssig ist (z.B. ist beim Einsatz einer MC-Steuerung für Werkzeugmaschinen, evtl. vorhandene Funktionalität für Verpackungsmaschinen überflüssig).

Aus der DE 197 40 550 ist außerdem eine Vorrichtung zum Steuern eines technischen Prozesses und/oder zur Steuerung der Bewegung einer Verarbeitungsmaschine bekannt, die ein Steuerprogramm abarbeitet. Dieses Steuerprogramm besteht aus einer Vielzahl von Softwaremodulen. Prozesssteuerungsfunktionalitäten von an sich bekannten speicherprogrammierbaren Steuerungen und Bewegungsfunktionalitäten von an sich bekannten MC-Steuerungen sind in einem einheitlichen, konfigurierbaren Steuerungssystem verwirklicht. Die einzelnen Software-Module werden hier jedoch durch jeweils eine Teilsteuerung abgearbeitet, so dass für jedes Software-Modul eine zentrale Recheneinheit vorzusehen ist.

Weiterhin ist aus der DE 198 53 205 ein Verfahren zur Steuerung technischer Prozesse bekannt, das auf einer Instanziierbarkeit sowie einer bedarfsgerechten Verschaltung von Software-Komponenten mit vorgebbarer, zumindest parametrierbarer Funktionalität basiert. Die Steuerungsstruktur entsteht durch Verschaltung von auf einem Systembaustein instanziierbaren sogenannten Basisobjekten, die mit unterschiedlicher Funktionalität ausgestattet sind. Derartige Basisobjekte sind Regler- und Treiberkomponenten einer Steuerung, wie Reglerobjekte, Führungsgrößenobjekte, Programmverarbeitungsobjekte, Treiberobjekte und dergleichen. Reale Objekte wie Achsen, Geber, Messtaster etc. können hiermit nicht oder nur schwer berücksichtigt werden.

Darüber hinaus ist in der Patentschrift US 5 453 933 A ein CNC-Steuersystem beschrieben, bei dem Objekte objektorientiert definiert werden. Bei dem dort beschriebenen System sind motion controller und logic controller explizit getrennt. Es sind Objekttypen für Achsen, Spindeln usw. vorgesehen. Für die Steuerung sind die Objekttypen fest vorgegeben, so dass eine individuelle Anpassung nicht stattfinden kann.

Der Erfindung liegt daher die Aufgabe zugrunde, für jeweils unterschiedliche Steuerungsaufgaben und unterschiedliche Randbedingungen bzw. Anforderungen des zugrunde liegenden technischen Prozesses in einfacher Weise optimale Ausprägungen einer industriellen Steuerung sowohl hinsichtlich ihrer Steuerungsstruktur als auch hinsichtlich ihrer Funktionalität zu erstellen.

Die Erfinder sind dabei von der Erkenntnis ausgegangen, dass das Runtime- und/oder Engineering-System der industriellen Steuerung sowohl SPS- als auch Bewegungs- und/oder Technologie-Funktionalität bedient und dass durch die Möglichkeit des dynamischen Zuladens von Funktionscode in das Runtime- und/oder Engineering-System der industriellen Steuerung jeweils eine optimale Ausprägung, d.h. Skalierung der Steuerung möglich sein müsste.

Gemäß der Erfindung wird die oben genannte Aufgabe für eine industrielle Steuerung der eingangs genannten Art dadurch gelöst, dass entsprechend Patentanspruch 1
a) die Steuerung ein allgemein einsetzbares technologieneutrales Basissystem für die Steuerungsgrundfunktionalität besitzt,
b) die technologische Funktonalität der Steuerung über technologische Objekttypen bereitgestellt ist,
c) die Technologischen Objekttypen zugeschnitten auf die jeweilige Applikation zu Technologischen Objekten instanziierbar sind, wobei
d) die Technologischen Objekttypen zugeschnitten auf die jeweilige Applikation in die Steuerung ladbar sind, so dass eine technologische Skalierung hinsichtlich der Funktionalität der Steuerung durchführbar ist und
e) die Technologischen Objekttypen mindestens einen Objekttyp für Achsen, Geber, Nocken, Messtaster, Gleichlauf oder Kurvenscheiben umfassen.

Ein entsprechendes Verfahren ist in Patentanspruch 18 definiert.

Ein Technologisches Objekt repräsentiert vorzugsweise eine Komponente der realen Welt. Im Kontext industrieller Steuerungen können dies z.B. Komponenten von Werkzeugmaschinen oder Produktionsmaschinen sein. Die Technologischen Objekte stellen eine definierte technologische, abgeschlossene Funktionalität bereit. Sie können untereinander verschaltet werden, um komplexe technologische Aufgaben zu realisieren. Dadurch dass die technologische Funktionalität der Steuerung durch Technologische Objekte, die vorzugsweise reale Komponenten, gebildet wird, ist einem Anwender oder Nutzer der Steuerung die technologische Mächtigkeit, d.h. die Fähigkeit der Steuerung sofort transparent. Als softwaretechnologische Einheit kann ein Technologisches Objekt außerdem von einem Anwender sehr leicht in unterschiedlichen Applikationen und Steuerungen wiederverwendet werden. Ein Anwender kann bei der Nutzung von Technologischen Objekten von deren Implementierung abstrahieren. Vom Anwender in seinen Anwenderprogrammen direkt einsetzbare Technologische Objekte entstehen durch ihre Instanziierung aus Technologieobjekttypen. Aus einem einmal definierten Technologieobjekttyp können beliebig viele Instanzen von Technologischen Objekten gewonnen werden. Dadurch dass die Instanziierung sowohl im Engineering-System als auch im Runtime-System erfolgen kann, ist es für einen Anwender sehr leicht und sehr komfortabel möglich, die Technologischen Objekte in seinen Anwendungen zu verwenden. Die funktionale Mächtigkeit einer Steuerung ist somit sehr leicht erweiterbar. Die Erweiterbarkeit wird lediglich durch HW-Restriktionen (z.B. CPU-Leistung oder Speicherbeschränkungen) begrenzt.

Weiterhin hat der Anwender die Möglichkeit das vorhandene Basissystem für die Steuerungsgrundfunktionalität um solche Funktionalitäten zu erweitern, die er wirklich für seine Anwendungen benötigt. Dies geschieht dadurch, dass er explizit bestimmte benötigte Technologische Objekte zum Basissystem der Steuerung hinzulädt. Ein Anwender kann sich somit individuell eine Steuerung mit einer bestimmten Funktionalität beschaffen. Üblicherweise in Steuerungen vorhandene nichtbenötigte Funktionalitäten werden dadurch vermieden und verursachen somit keinen Overhead.

Ein weiterer Vorteil liegt in der Entwicklung und in der Produktion solcher skalierbaren Steuerungen. Steuerungen, die mit einer notwendigen Grundfunktionalität (Basissystem) ausgeliefert werden, lassen sich in großer Stückzahl sehr einfach herstellen (economies of scale).

Eine erste vorteilhafte Ausgestaltung der Erfindung liegt darin, dass das Laden und die Verteilung der Technologischen Objekte auf unterschiedlich oder gleich performante Hardware-Systeme und/oder Laufzeitsysteme erfolgt. Technologische Objekte sind plattform- bzw. hardware-unabhängig. Sie enthalten keine plattform- bzw. hardware-spezifischen Eigenschaften und können somit sehr leicht auf unterschiedliche Hardware-Systeme und/oder Laufzeitsysteme geladen und verteilt werden. Durch die Möglichkeit der Lad- und Verteilbarkeit der Technologischen Objekte auf unterschiedlich oder gleich performante Hardware-Systeme kann ein Anwender Technologische Objekte sehr flexibel benutzen und einsetzen. Er muss sich bei der Ladbarkeit und der Verteilbarkeit der Technologischen Objekte nicht um Restriktionen bezüglich der zugrundeliegenden Performance der Hardware- und/oder von Laufzeit-Systemen kümmern.

Eine weitere vorteilhafte Ausgestaltung der zugrunde liegenden Erfindung liegt darin, dass das Laden und die Verteilung der Technologischen Objekte auf unterschiedlich oder gleich performante Hardware- und/oder Laufzeit-Systeme innerhalb eines Projektes erfolgt, wobei sich ein Projekt auf Daten und/oder Programme von einer oder mehreren Steuerungseinheiten bezieht. Ein Anwender hat somit die Möglichkeit innerhalb eines Projektes Geräte unterschiedlicher Hardware einzusetzen, die auch unterschiedlich performant sein können, auf die er Technologische Objekte leicht und flexibel verteilen kann, ohne die unterschiedliche Performance der Geräte berücksichtigen zu müssen.

Eine weitere vorteilhafte Ausgestaltung der zugrunde liegenden Erfindung liegt darin, dass die Verteilung der Funktionalität der Technologischen Objekte auf miteinander in Echtzeit durch taktsynchron äquidistant kommunizierende Steuerungseinheiten erfolgt. Die Technologischen Objekte können somit auf Geräte bzw. Steuerungseinheiten verteilt werden, die über ein Kommunikationsmedium in Verbindung stehen, das eine taktsynchrone äquidistante Kommunikation erlaubt. Somit können die Technologischen Objekte in Echtzeit miteinander kommunizieren. In einem Projekt sind die Instanzen von Technologischen Objekttypen eindeutig referenzierbar und können (HW-) plattformübergreifend genutzt werden.

Eine weitere vorteilhafte Ausgestaltung der vorliegenden Erfindung liegt darin, dass die Funktionalität der Steuerung durch die Zuladbarkeit beliebiger Technologischer Objekte flexibel erweiterbar ist. Damit hat der Anwender die Möglichkeit eine funktionale Skalierung seiner Steuerung zu erreichen. Er kann somit sehr einfach die Funktionalität der Steuerung an die zugrundeliegenden und vorliegenden Bedürfnisse und Randbedingungen anpassen. Die Erweiterbarkeit bezieht sich sowohl auf Gerätefunktionalität als auch auf technologische Funktionalität.

Eine weitere vorteilhafte Ausgestaltung der Erfindung liegt darin, dass die Technologischen Objekte Programmierinterfaces und/oder Systemvariablen und/oder Alarme enthalten. Durch die Programmierinterfaces können die Technologischen Objekte in einem Anwenderprogramm aufgerufen und verwendet werden. Über die Systemvariablen werden zum einen die Zustandsdaten der Technologischen Objekte dem Anwenderprogramm bereitgestellt, zum anderen enthalten die Systemvariablen parametrierbare Einstellungen für die Programmierung, die aus dem Anwenderprogramm heraus verändert werden können. Über Strukturen können die Werte von Systemvariablen konsistent ausgelesen werden. Systemvariablen werden beim Zugriff aus dem Anwenderprogramm vom System aktualisiert, soweit sie Status und Zustand wiedergeben. Technologische Alarme werden am Technologischen Objekt festgestellt und erzeugt. Ihr Verhalten auf die Programmbearbeitung (globale Reaktion) ist für jeden Fehler instanzspezifisch am Engineering-System bei der Inbetriebnahme einstellbar Die Alarme besitzen zusammen mit der TO-Instanz einen eindeutigen Identifikator.

Eine weitere vorteilhafte Ausgestaltung der vorliegenden Erfindung liegt darin, dass die Technologischen Objekte in eine Programmierumgebung integriert sind. Dadurch ist es einem Anwender sehr leicht und komfortabel möglich, die Technologischen Objekte in seinen Anwenderprogrammen zu verwenden.

Eine weitere vorteilhafte Ausgestaltung der vorliegenden Erfindung liegt darin, dass eine Standardprogrammierumgebung verwendet wird. Standardprogrammierumgebungen sind z.B. IEC1131, C++ oder Java. Durch die Einbindung der Technologischen Objekte in IEC1131 hat der Anwender die Möglichkeit in einer für industrielle Belange genormten Programmierumgebung direkt Technologische Objekte zu verwenden. Durch die Integration der Technologischen Objekte in C++ oder Java hat der Anwender darüber hinaus die Möglichkeit Technologische Objekte in einer objektorientierten Programmierumgebung direkt zu verwenden. Durch die Integration der Technologischen Objekte in die genannten Programmierumgebungen wird der Sprachumfang bzw. der Funktionsumfang dieser Programmierumgebungen bezüglich ihrer technologischen Funktionalität und auf Belange industrieller Steuerungen hin erweitert.

Eine weitere vorteilhafte Ausgestaltung der vorliegenden Erfindung liegt darin, dass eine rückwirkungsfreie Programmierung eines Technologischen Objektes bezüglich der anderen vorhandenen Technologischen Objekte und des Steuerungsbasissystems, sofern nicht explizit eine Rückwirkung programmiert bzw. projektiert ist, vorgesehen ist. Der Anwender kann somit das Verhalten eines Technologischen Objektes unabhängig von Rückwirkungen anderer Technologischen Objekte oder des Steuerungsbasissystems programmieren. Wenn erforderlich oder gewünscht kann er aber explizit eine Rückwirkung programmieren bzw. projektieren. Die Flexibilität des Anwenders bei der Programmierung Technologischer Objekte wird dadurch erhöht.

Eine weitere vorteilhafte Ausgestaltung der vorliegenden Erfindung liegt darin, dass die Nutzung der Technologischen Objekte Hardware- bzw. Plattformneutral erfolgt. Der Anwender kann somit bei der Nutzung der Technologischen Objekte vollkommen von der zugrunde liegenden Hardware- bzw. Plattform abstrahieren. Er kann sich bei der Verwendung von Technologischen Objekten in seinen Anwenderprogrammen somit vollkommen auf die technologische Funktionalität dieser Objekte konzentrieren.

Eine weitere vorteilhafte Ausgestaltung der vorliegenden Erfindung liegt darin, dass Technologische Objekte bezüglich ihrer Funktionalität zu anderen Technologischen Objekten hierarchische Beziehungen und/oder Datenflussbeziehungen aufweisen. Damit lassen sich Strukturen und Beziehungen von realen Umgebungen direkt auf Technologische Objekte abbilden. So enthält z.B. das Technologische Objekt "Gleichlaufachse" die Funktionalität des Technologischen Objektes "Positionierachse", das wiederum die Funktionalität des Technologischen Objektes "Drehzahlachse" enthält.

Insbesondere für Bewegungssteuerungen sind Elemente wie Achsen, Geber, Nocken, Messtaster, Gleichlauf und Kurvenscheiben als Technologische Objekte vorhanden. Diese Technologischen Objekte repräsentieren typische Elemente aus dem Kontext von Bewegungssteuerungen. Ihre Repräsentation als Technologische Objekte kann ein Anwender direkt in seinen Anwendungen verwenden.

Eine weitere vorteilhafte Ausgestaltung der vorliegenden Erfindung liegt darin, dass die Technologieobjekttypen zu Technologiepaketen zusammenfassbar sind. Durch die Clusterung und Zuordnung von Technologieobjekttypen zu Technologiepaketen wird zum einen eine Strukturierung und Klassifizierung erreicht und zum anderen sind die Technologiepakete ein geeignetes Mittel, um die Technologieobjekttypen auf das Runtime-System einer Steuerung zu laden.

Eine weitere vorteilhafte Ausgestaltung der vorliegenden Erfindung liegt darin, dass die Programmerstellung vor Zuordnung der Hardware-Plattform erfolgt. Technologische Objekte können somit in Programmen unabhängig von der Ziel-Hardware verwendet werden. Dadurch wird die Wiederverwendung von Software erleichtert und erhöht.

Eine weitere vorteilhafte Ausgestaltung der vorliegenden Erfindung liegt darin, dass die Anzahl der Instanziierungen von Technologieobjekttypen flexibel einstellbar ist. Ein Anwender wird somit bei der Anzahl von Instanzen in seinem Anwenderprogramm nur durch Hardware-Restriktionen (z.B. CPU-Leistung oder Speicherplatz) eingeschränkt.

Eine weitere vorteilhafte Ausgestaltung der vorliegenden Erfindung liegt darin, dass die Instanzen von Technologieobjekttypen auf einer oder auf mehreren Steuerungseinheiten verteilt abgelegt werden. Dadurch ist es möglich, die Last in einem System flexibel zu verteilen und zu balancieren.

Eine weitere vorteilhafte Ausgestaltung der vorliegenden Erfindung liegt darin, dass die Befehle von Technologischen Objekten synchron und/oder asynchron genutzt werden. Dadurch wird eine zyklische Programmiermöglichkeit im Sinne einer Speicherprogrammierbaren Steuerung (SPS) und eine ablauforientierte Programmiermöglichkeit (wie bei Bewegungssteuerungen üblich) unterstützt. Der Anwender kann dabei angeben, ob ein Befehl synchron oder asynchron ausgeführt werden soll.

Gemäß der Erfindung kann ein Verfahren zur Erstellung einer industriellen Steuerung auch die folgenden aufeinander folgenden Schritte umfassen:
a) Verwendung eines Basissystems mit einer vorzugsweise technologieneutralen Grundfunktionalität,
b) Auswahl und Instanziierung der für die Anwendung relevanten Technologischen Objekttypen und Konfiguration der erhaltenen Technologischen Objekte im Engineering-System,
c) Hinzuladen der ausgewählten Technologischen Objekttypen ins Runtime-System,
d) Laden und Nutzung der instanziierten Technologischen Objekte und der Instanziierungsinformation im Runtime-System,
e) Erstellung der Anwenderprogramme unter Nutzung der instanziierten Technologischen Objekte und
f) Laden der Anwenderprogramme ins Runtime-System.

Dadurch hat der Anwender die Möglichkeit auf eine systematische und folgerichtige Weise die Funktionalität einer gewünschten Steuerung zu erreichen, wobei sichergestellt ist, dass die erhaltene Steuerung keinen funktionalen Overhead beinhaltet.

Die wesentlichen, mit der Erfindung erzielten Vorteile bestehen also insbesondere darin, dass ein Anwender direkt technologische Funktionalität in seinen Anwendungen verwenden kann, die ihm durch Technologische Objekte, die Elemente der realen Welt entsprechen, in einer für ihn adäquaten Weise verwenden kann.

Ein weiterer Vorteil liegt darin, dass die Funktionalität von industriellen Steuerungen sozusagen "plug and play"-mäßig dediziert erweiterbar ist. Auf diese Weise wird eine technologische Skalierung der Steuerung erreicht.

Ein Ausführungsbeispiel der Erfindung ist in der Zeichnung dargestellt und wird im folgenden erläutert.
Dabei zeigen:
- FIG 1: in einem Strukturbild ein Engineering-System, das zugehörige Runtime-System und den zu steuernden technischen Prozess,
- FIG 2: zeigt in einem Übersichtsbild wie ein Anwenderprogramm auf technologische Funktionalität im Runtime-System zugreift,
- FIG 3: zeigt in einer abstrakten Schemadarstellung ein Technologisches Objekt mit Anwenderschnittstelle,
- FIG 4: zeigt in Form eines sog. Verschaltungsdiagrammes Technologische Objekte, die einen Gleichlaufverbund darstellen,
- FIG 5: zeigt einen Gleichlaufverbund mit Umschaltmöglichkeiten zwischen verschiedenen Leitwertquellen und Gleichlaufgesetzen, ebenfalls in Form eines Verschaltungsdiagrammes,
- FIG 6: zeigt in Form eines Verschaltungsdiagrammes die Verschaltung des Technologischen Objektes Messtaster,
- FIG 7: zeigt in Form eines Verschaltungsdiagrammes die Verschaltung des Technologischen Objektes Nocke,
- FIG 8: zeigt in Form eines Verschaltungsdiagrammes Verschaltungen mit Gleichlauftechnologieobjekten,
- FIG 9: zeigt ebenfalls in Form eines Verschaltungsdiagrammes die Zuordnung eines Technologischen Objektes Kurvenscheibe zum mehreren Gleichlaufobjekten und
- FIG 10: zeigt in einem Übersichtsbild die Clusterung von Technologieobjekttypen zu einem Technologiepaket.

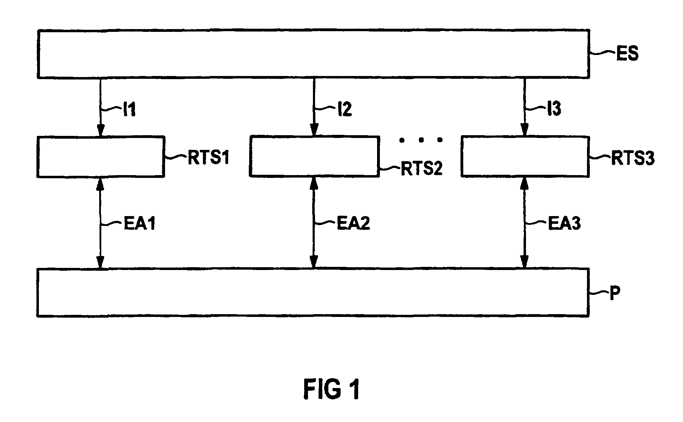

In der Darstellung gemäß FIG 1 wird in Form eines Strukturbildes gezeigt, dass die Steuerung eines technischen Prozesses P über mindestens ein Runtime-System RTS1-RTS3 von industriellen Steuerungen erfolgt. Die Verbindung zwischen den Runtime-Systemen RTS1-RTS3 der Steuerung und dem technischen Prozess P geschieht bidirektional über Ein-/Ausgänge EA1-EA3. Die Programmierung der Steuerung und damit das Festlegen des Verhaltens der Runtime-Systeme RTS1-RTS3 geschieht im Engineering-System ES. Das Engineering-System ES enthält Werkzeuge für die Konfigurierung, Projektierung und Programmierung für Maschinen bzw. für die Steuerung technischer Prozesse. Die im Engineering-System ES erstellten Programme werden über die Informationspfade I1-I3 jeweils in die Runtime-Systeme RTS1-RTS3 der Steuerungen übertragen. Durch die drei Punkte ist angedeutet, dass weitere Steuerungen und Runtime-Systeme vorhanden sein können. Bezüglich seiner Hardware-Ausstattung besteht ein Engineering-System ES üblicherweise aus einem Computersystem mit Graphikbildschirm (z.B. Display), Eingabehilfsmitteln (z.B. Tastatur und Maus), Prozessor, Arbeits- und Sekundärspeicher, eine Einrichtung für die Aufnahme computerlesbarer Medien (z.B. Disketten, CD's) sowie Anschlusseinheiten für einen Datenaustausch mit anderen Systemen (z.B. weiteren Computersystemen, weitere Steuerungen für technische Prozesse) oder Medien (z.B. Internet). Eine Steuerung besteht üblicherweise aus Eingabe- und Ausgabeeinheiten, sowie aus Prozessor und Programmspeicher.

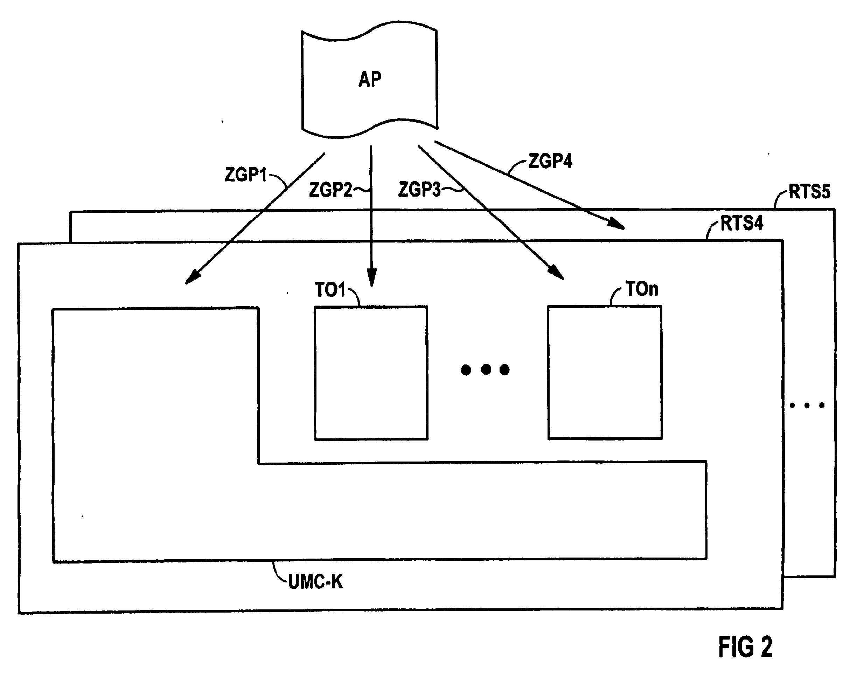

Darstellung gemäß FIG 2 zeigt zwei Runtime-Systeme RTS4 und RTS5 von industriellen Steuerungen, dargestellt als Rechteck. Die Runtime-Systeme RTS4 und RTS5 enthalten jeweils einen UMC-Kernel UMC-K, sowie die Technologischen Objekte TO1 bis TOn, wobei die jeweiligen UMC-Kernels als auch die Technologischen Objekte unterschiedlich sein können, die Technologischen Objekte auch in ihrer Anzahl. Der UMC-Kernel UMC-K stellt das Basissystem der Steuerung dar, dieses Basissystem enthält die Grundfunktionalität der Steuerung. Der UMC-Kernel UMC-K ist in rechtwinkliger Stufenform dargestellt. Zu ihm können Technologische Objekte TO1 bis TOn hinzugeladen werden. Durch dieses Hinzuladen wird der Funktionsumfang des Basissystems erweitert. Die Technologischen Objekte TO1 bis TOn sind als Rechtecke dargestellt, durch ihre Anordnung in FIG 2 wird angedeutet, dass sie den UMC-Kernel UMC-K erweitern. Durch die drei Punkte wird angedeutet, dass ein bis mehrere Technologische Objekte TO1 bis TOn hinzugeladen werden können und somit eine technologische Skalierung der gesamten Steuerung erreicht wird. Zentriert am oberen Rand von FIG 2 ist das Anwenderprogramm AP in Form einer schematischen Papierfahne dargestellt. Durch die Zugriffspfeile ZGP1 bis ZGP4 ist dargestellt, dass ein Anwender in seinem Anwenderprogramm AP direkt auf Funktionalitäten des UMC-Kernels UMC-K aber auch auf Funktionalitäten der Technologischen Objekte TO1 bis TOn zugreifen kann, sowohl von RTS4 als auch von RTS5 oder von einem weiteren Runtime-System (ebenfalls angedeutet durch drei Punkte). Diese angebotene Funktionalitäten der Runtime-Systeme RTS4 und RTS5 (oder von weiteren Runtime-Systemen) kann ein Anwender direkt in seinem Anwendungsprogramm AP verwenden.

Zur Präzisierung: Zur Erweiterung des Basissystems eines Runtime-Systems werden Technologieobjekte üblicherweise in Form von Technologieobjekttypen hinzugeladen. Solche Technologieobjekttypen sind z.B. Achsen, Nocken, Kurvenscheiben oder ähnliches. Technologieobjekttypen sind instanziierbar. Ein Anwender verwendet in seinen Anwendungsprogrammen AP für konkrete Applikationen Instanzen von Technologieobjekttypen. Solche Instanzen sind dann projektweit eindeutig definiert und identifizierbar. Die direkte Verwendung von zugeladenen Technologischen Objekten in Anwenderprogrammen AP als jeweils eigenständige Programmobjekte wäre prinzipiell auch denkbar, ist aber für einen Anwender für die Programmerstellung unflexibel.

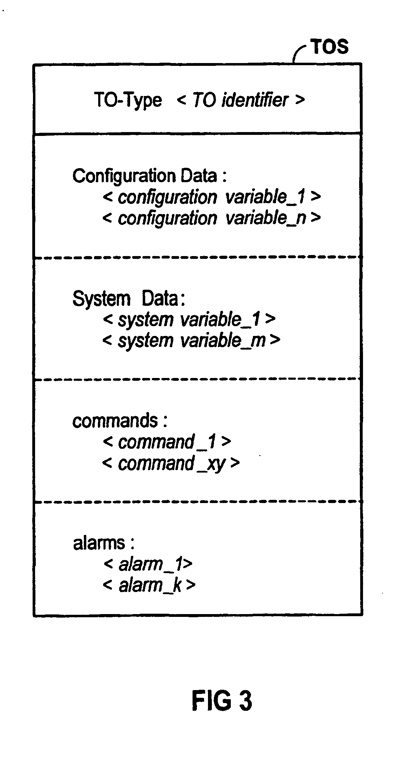

Darstellung gemäß FIG 3 zeigt in einer abstrakten Schemadarstellung die Anwendersicht eines Technologischen Objektes, d.h. einer Instanz eines Technologieobjekttyps. Diese Spezifikation eines Technologischen Objektes TOS wird als Rechteck dargestellt, das aus fünf Teilen besteht. Der oberste erste Teil, abgetrennt von den folgenden Teilen durch eine durchgezogene Linie, enthält den Typ des zugrunde liegenden Technologischen Objektes (TO-Type) und den TO-Identifier, d.h. die projekteindeutige Bezeichnung der Instanziierung. Der nächst folgende Teil enthält die Konfigurationsdaten (Configuration Data) mit den Konfigurationsvariablen <configuration variable_1> bis <configuration variable_n>. Über die Konfigurationsdaten wird das Technologische Objekt in seiner grundsätzlichen Wirkungsweise eingestellt. Die Konfigurationsdaten werden über das Engineering-System (ES; FIG 1) eingestellt und können optional über Zugriffsfunktionen aus dem Anwenderprogramm (AP; FIG 2) heraus gelesen bzw. geschrieben werden. In der Darstellung gemäß FIG 3 werden die Konfigurationsdaten durch eine gestrichelte Linie von den Systemvariablen (System Data) abgetrennt. Die Systemvariablen <system variable_1> bis <system variable_m> sind aus dem Anwenderprogramm (AP; FIG 2) heraus veränderbar und wie Programmvariable nutzbar. Systemvariablen können lesbar oder les-/schreibbar sein. Durch die Systemvariablen werden außerdem die Zustände von Technologischen Objekten repräsentiert. Zustandsübergänge können durch Ereignisse und/oder Befehle ausgelöst werden. Über die Konfigurationsdaten und die Systemvariablen erfolgt die Parametrierung der Technologischen Objekte. Der nächste Abschnitt sind die Befehle (Commands), von den Systemvariablen ebenfalls durch eine gestrichelte Linie getrennt. Die Befehle <command_1> bis <command_xy> stellen aufrufbare Funktionen dar, die die Funktionalität eines Technologischen Objekts repräsentieren. Diese Funktionen haben definierte Bezeichner, Funktionsparameter und lokale Werte. Die Funktionen können Parameter besitzen. Beim Aufruf von Funktionen können optionale Parameter weggelassen werden, hierfür werden dann Defaultwerte eingesetzt. Zusätzlich zur technologischen Funktionalität besitzt ein Technologisches Objekt aber auch Befehle, die das Grundverhalten des Technologischen Objektes bestimmen, z.B.
- Befehl zum Rücksetzen in einem definierten Ausgangszustand
- Befehl um einen anstehenden Fehler gezielt rückzusetzen
- Befehle um in den Simulatonsbetrieb zu setzen und rückzusetzen ( Im Simulationsbetrieb erfolgt ein Durchlauf des Programms ohne konkrete Ausgabe an die Aktoren, bzw. Einlesen von den Sensoren ).
- Befehle um das Technologische Objekt aktiv/inaktiv zu setzen
- Auskunftsfunktionen.
Der nächste Abschnitt der Spezifikation eines Technologischen Objektes TOS sind die Alarme (alarms). In FIG 3 sind die Alarme durch eine gestrichelte Linie von den Befehlen abgetrennt. Die Darstellung gemäß FIG 3 enthält die Alarme <alarm_1> bis <alarm_k>. Ein Technologisches Objekt hat Überwachungen und kann im Fehlerfall definierte Alarme, gegebenenfalls mit Alarminformationen und vordefinierten Reaktionen absetzen. Die technologischen Alarme werden am Technologischen Objekt festgestellt bzw. erzeugt. Technologische Alarme haben eine technologieobjekttypspezifisch eingestellte Reaktion, z.B. Bewegungsstopp (die möglichen Reaktionen sind technologieobjekttypspezifisch und daher bei den einzelnen Technologieobjekttypen explizit beschrieben). Weiterhin besitzen die technologischen Alarme einen technologieobjekttypspezifischen Identifikator (z.B. Alarmnummer) und Parameter. Sie besitzen somit ein einstellbares Verhalten auf die Programmbearbeitung (globale Reaktion) und erlauben weiterhin für jeden Fehler instanzspezifische Einstellungen und Reaktionen, die bei der Inbetriebnahme am Engineering-System (ES; FIG 1) vorgenommen werden.

Ein Anwender kann Befehle von Technologischen Objekten synchron oder asynchron nutzen, je nach Einstellung. Dadurch kann ein Befehl sowohl zyklisch geschrieben (üblich bei einer Speicherprogrammierbaren Speicherung) aber auch ereignisgesteuert (üblich bei Bewegungssteuerungen) programmiert werden. Im synchronen Modus bleibt z.B. das technologische Objekt, das einen Positionierbefehl ausführt, solange in seinem Zustand, bis das Positionierziel erreicht wurde. Im asynchronen Modus dagegen läuft zeitgleich zur Ausführung des Positionierbefehls das Technologische Objekt in seinem Programmablauf weiter und kann dabei andere Zustände einnehmen. Das Technologische Objekt kann dann z.B. durch Polling geprüft werden, ob das Positionierziel erreicht wurde.

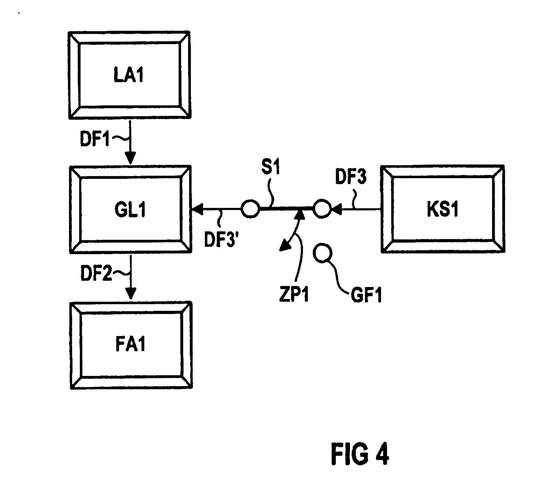

Die Darstellung gemäß FIG 4 zeigt als Verschaltungsdiagramm die Verschaltung des Technologischen Objektes "Gleichlauf" GL1 mit anderen Technologischen Objekten. Die Technologischen Objekte werden dabei als doppelt umrandete Rechtecke dargestellt, bei denen die jeweils zusammen gehörenden Ecken durch eine Verbindungslinie verbunden sind. Durch die Verschaltung des Technologischen Objektes "Gleichlauf" GL1 mit den Technologischen Objekten "Leitachse" LA1, "Folgeachse" FA1 und "Kurvenscheibe" KS1 wird ein Gleichlaufverbund hergestellt. Die Verschaltung der Technologischen Objekte erfolgt über Datenflüsse DF1 bis DF3 bzw. DF3'.FIG 4 zeigt die prinzipielle Technologieanordnung für die Realisierung eines Gleichlaufverbundes: Leitwert - Technologisches Objekt "Gleichlauf" GL1 - Technologisches Objekt "Folgeachse" FA1. In FIG 4 wird der Leitwert durch das Technologische Objekt "Leitachse" LA1 repräsentiert. Weiterhin ist in FIG 4 ist dargestellt, dass das Technologische Objekt "Leitachse" LA1 über den Datenflusspfeil DF1 den Leitwert für das Technologische Objekt "Gleichlauf" GL1 vorgibt. Das Technologische Objekt "Leitachse" LA1 kann z.B. eine Positionierachse repräsentieren. Der Leitwert kann aber auch über eine virtuelle Achse d.h. gerechnete (nicht real vorhandene) Achse oder über externe Geber für das Technologische Objekt "Gleichlauf" GL1 vorgegeben werden. Das Technologische Objekt "Gleichlauf" GL1 stellt als technologische Funktionalität Getriebegleichlauf oder Kurvengleichlauf zur Verfügung, damit können Aufsynchronisieren, Absynchronisieren oder Masterumschaltungen vorgenommen werden. Am Technologischen Objekt "Gleichlauf" GL1 kann als Gleichlaufgesetz wahlweise ein Getriebe oder eine Kurve gewählt werden. Der rechte Teil von FIG 4 stellt diese Auswahlmöglichkeiten dar. Durch den Zuordnungspfeil ZP1 ist dargestellt, dass der Schalter S1 wahlweise mit einem Getriebe, dargestellt durch den Getriebefaktor GF1 oder mit dem Technologischen Objekt "Kurvenscheibe" KS1 verbunden werden kann. Bei einer Verbindung mit dem Technologischen Objekt "Kurvenscheibe" KS1 erfolgte Datenfluss von diesem Technologischen Objekt zum Technologischen Objekt "Gleichlauf" GL1 über den Datenflusspfeil DF3, den Schalter S1 und den Datenflusspfeil DF3'. Bei einer Verbindung mit dem Getriebefaktor GF1 erfolgt der Datenfluss zum Technologischen Objekt "Gleichlauf" GL1 über den Schalter S1 und den Datenflusspfeil DF3'. Über das Technologische Objekt "Kurvenscheibe" KS1 können nicht lineare Getriebeübersetzungen am Technologischen Objekt "Gleichlauf" GL1 eingestellt werden, über den Getriebefaktor GF1 dagegen lineare Getriebeübersetzungen. Durch den Datenflusspfeil DF2 ist das Technologische Objekt "Gleichlauf" GL1 mit dem Technologischen Objekt "Folgeachse" FA1 verschaltet.

Die Darstellung gemäß FIG 4 zeigt somit die prinzipielle Konfiguration von Technologischen Objekten zur Realisierung einer Gleichlauffunktionalität und kann ihrerseits als (komplexes) Technologisches Objekt angesehen und verwendet werden.

Die Festlegung der Verschaltung der Technologischen Objekte erfolgt in der Konfigurationsphase (Projektierung). Bei Auswahlmöglichkeiten werden diese zur Laufzeit über das Anwenderprogramm (AP; FIG 2) aktiviert, d.h. zur Laufzeit können Umschaltungen programmiert werden. Prinzipiell können durch Verschaltung mehr als ein "Gleichlaufobjekt" GL1 mit einer "Folgeachse" FA1 verbunden werden, dadurch wird eine Überlagerung von Gleichlauffunktionen realisiert. Der Leitwert für das "Gleichlaufobjekt" GL1 kann auch direkt aus dem Anwenderprogramm (AP; FIG 2) vorgegeben werden. Weiterhin kann mehr als ein Technologisches Objekt für die Leitwertbereitstellung konfiguriert werden. Die aktuelle Verschaltung wird wiederum zur Laufzeit über Befehle im Anwenderprogramm (AP; FIG 2) ausgewählt und aktiviert. Außerdem kann für die Festlegung des Gleichlaufgesetzes zwischen verschiedenen Technologischen Objekten "Kurvenscheibe" KS1 und/oder zwischen verschiedenen Getriebefaktoren GF1 durch Programmierung online umgeschaltet werden. Ein Technologisches Objekt "Kurvenscheibe" KS1 kann einem oder mehreren Technologischen Objekten "Gleichlauf" GL1 zugeordnet werden. Weiterhin können von einem Technologischen Objekt "Leitachse" LA1 eine oder mehrere Gleichlaufverbindungen über Technologische Objekte "Gleichlauf" GL1 konfiguriert werden.

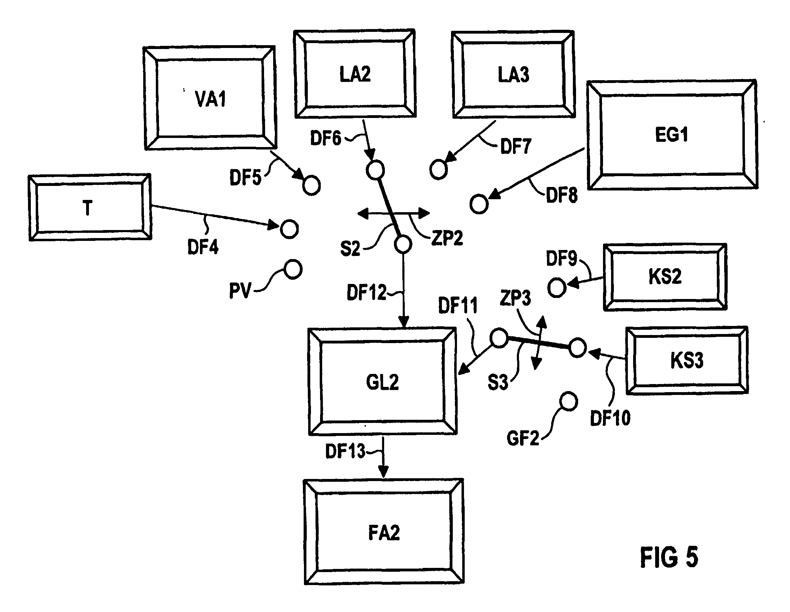

Darstellung gemäß FIG 5 zeigt einen Gleichlaufverbund mit Umschaltmöglichkeiten zwischen verschiedenen Leitwertquellen und Gleichlaufgesetzen, ebenfalls in Form eines Verschaltungsdiagramms. In FIG 5 kann das Technologische Objekt "Gleichlauf" GL2 Leitwerte von den Technologischen Objekten "Zeit" T, "virtuelle Achse" VA1, "Leitachse" LA2, "Leitachse" LA3, "externer Geber" EG1 sowie von einem Programmwert TV des Anwenderprogrammes (AP; FIG 2) bekommen. Durch den Zuordnungspfeil ZP2 ist angedeutet, dass der Schalter S2 unterschiedliche Leitwertverbindungen für das Technologische Objekt "Gleichlauf" GL2 herstellen kann. Über einen der Datenflüsse DF4 bis DF8 sowie über den Schalter S2 und den Datenfluss DF12 wird die "Leitwertverschaltung" zum Technologischen Objekt "Gleichlauf" GL2 erreicht. Die Technologischen Objekte "Zeit" T, "virtuelle Achse" VA1, "Leitachse" LA2 und LA3, "externer Geber" EG1 sowie der Programmwert TV sind die potentiellen Master für das Technologische Objekt "Gleichlauf" GL2. Die möglichen Verschaltungen werden projektiert und die Auswahl eines projektierten Masters kann zur Laufzeit aus dem Anwenderprogramm (AP; FIG 2) erfolgen. Damit sind Masterumschaltungen möglich. Das Technologische Objekt "virtuelle Achse" VA1 repräsentiert nicht eine real vorhandene Achse sondern eine gerechnete Achse. "Virtuelle Achsen" sind dadurch gekennzeichnet, dass sie über Befehle kommandiert werden können und eine Bewegungsführung bzw. Interpretation besitzen, aber keine Regelung und keinen Antrieb. Die Technologischen Objekte "Leitachse" LA2 und LA3 repräsentieren dagegen reale Achsen. Reale Achsen repräsentieren Standardachsen mit Antrieb, Motor, Geber, sie besitzen also einen realen Aktor. Auch das Technologische Objekt "externer Geber" EG1 kann einen Leitwert für das Technologische Objekt "Gleichlauf" GL2 bereitstellen. Ein "externer Geber" EG1 besitzt üblicherweise keine Achse und stellt die Informationen in einem projektierbaren Format bereit. "Externe Geber" sind z.B. Winkelgeber an einer Presse. Auch vom Technologischen Objekt "Zeit" T und vom Programmwert TV können Leitwerte für das Technologische Objekt GL2 bereitgestellt werden. Ein Technologisches Objekt "Zeit" stellt einen Leitwert in Form eines Zeitwertes bzw. Zeitfaktors bereit, die Projektierung eines Programmwertes DV als Leitwert erfolgt im Anwenderprogramm (AP; FIG 2). Die Technologischen Objekte sind hierbei in der üblichen Notation dargestellt.

In FIG 5 ist dargestellt, dass als Gleichlaufgesetz für das Technologische Objekt "Gleichlauf" GL2 wahlweise ein Getriebefaktor GF2 oder die Technologischen Objekte "Kurvenscheibe" KS2 und KS3 gewählt werden können. Durch den Zuordnungspfeil ZP3 ist dargestellt, dass der Schalter S3 wahlweise zwischen den Technologischen Objekten KS2, KS3 und dem Getriebefaktor GF2 eingestellt werden kann. Die "getriebemäßige Verschaltung" mit dem Technologischen Objekt "Gleichlauf" GL2 erfolgt dann über die Datenflusspfeile DF9, DF10, den eingestellten Schalter S3 sowie über den Datenflusspfeil DF11. Die Schalteverbindungen S2 und S3 sind im Anwenderprogramm (AP; FIG 2) programmierbar. Über den Datenflusspfeil DF 13 ist das Technologische Objekt "Gleichlauf" GL2 mit dem Technologischen Objekt "Folgeachse" FA2 verbunden. Das Technologische Objekt "Gleichlauf" GL2 wird bei der Projektierung also slaveseitig mit dem Technologischen Objekt "Folgeachse" FA2 das z.B. eine Gleichlaufachse repräsentieren kann, verschaltet. Masterseitig wird das Technologische Objekt "Gleichlauf" GL2 mit einem Technologischen Objekt verschaltet, dass einen Leitwert zur Verfügung stellt, dieser Leitwert kann auch direkt aus dem Anwenderprogramm (AP; FIG 2) vorgegeben werden. Somit kann mehr als ein Technologisches Objekt für die Leitwertbereitstellung konfiguriert werden, die aktuelle Verschaltung wird zur Laufzeit über Befehle im Anwenderprogramm ausgewählt.

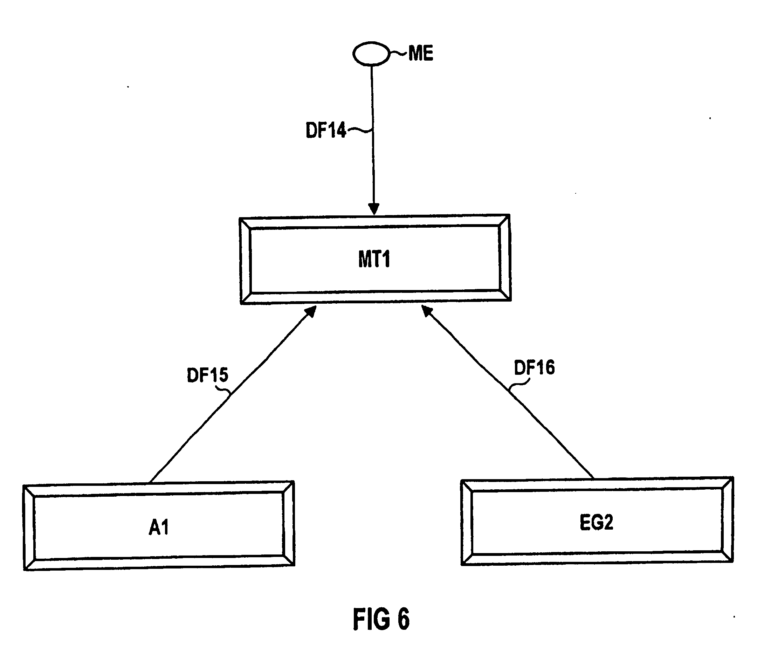

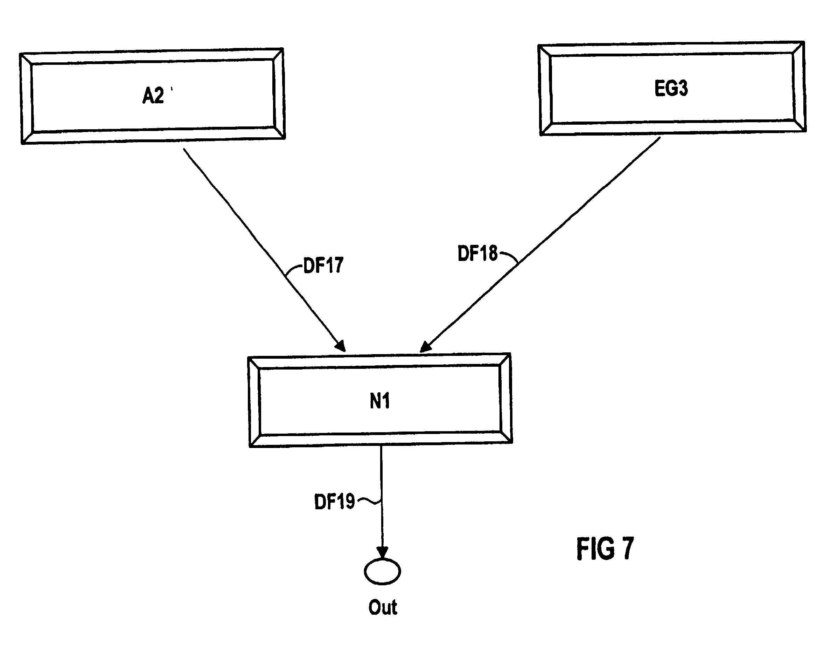

Die Darstellung gemäß FIG 6 zeigt die Verschaltung des Technologischen Objektes "Messtaster" MT1. Die Technologischen Objekte sind hierbei in der üblichen Notation dargestellt. Das Technologische Objekt "Messtaster" MT1 stellt die Funktionalität zur Durchführung eines Messauftrages bereit. Für die Funktionen am Technologischen Objekt "Messtaster" MT1 können Messaufträge aktiviert und parametriert werden. Über den Messeingang ME und den Datenflusspfeil DF14 wird der Messwert an das Technologische Objekt "Messtaster" MT1 geliefert. Der Messeingang ME ist als Ellipse dargestellt. Ein Messeingang ME kann mit mehreren Technologischen Objekten "Messtaster" verschaltet sein. Diese Technologischen Objekte "Messtaster" können dabei auch gleichzeitig aktiviert sein. Ein Messeingang ME entspricht dabei üblicherweise einem Hardware-Messeingang der dem Technologischen Objekt "Messtaster" MT1 über Konfiguration zugeordnet wird. Weiterhin ist das Technologische Objekt "Messtaster" MT1 mit mindestens einem Technologischen Objekt verschaltet, das einen Messwert (z.B. Position) liefert. In FIG 7 ist das Technologische Objekt "Messtaster" MT 1 mit den Technologischen Objekten "Achse" A1 und "externer Geber" EG2 über die Datenflusspfeile DF15 bzw. DF16 verschaltet. Das Technologische Objekt "Achse" A1 kann z.B. eine Positionierachse oder eine Gleichlaufachse sein. Ein Technologisches Objekt, das einen Messwert liefert, kann mit mehreren Technologischen Objekten "Messtaster" verschaltet werden.

Die Darstellung gemäß FIG 7 zeigt in einem Verschaltungsdiagramm das Technologische Objekt "Nocke" N1, verschaltet mit den Technologischen Objekten "Achse" A2 und "externer Geber" EG3. Das Technologische Objekt "Achse" A2 ist über den Datenflusspfeil DF17, das Technologische Objekt "externer Geber" EG3 ist über den Datenflusspfeil DF18 mit dem Technologischen Objekt "Nocke" N1 verschaltet. Über den Datenflusspfeil DF19 ist das Technologische Objekt "Nocke" N1 mit dem Ausgang Out verschaltet, der Ausgang Out ist als Ellipse dargestellt. Das Technologische Objekt "Nocke" N1 stellt die Funktionalität zur Berechnung von Nockenschaltwerten bereit. Über die Funktionen am Technologischen Objekt "Nocke" N1 können Nockenfunktionen aktiviert und parametriert werden. Die Technologischen Objekte "Achse" A2 bzw. "externer Geber" EG3 stellen die Bezugswerte für das Technologische Objekt "Nocke" N1 bereit. Die Zuordnung dieser Technologischen Objekte zum Technologischen Objekt "Nocke" N1 wird vom Anwender projektiert. Der Anwender projektiert weiterhin die Zuordnung des Technologischen Objektes "Nocke" N1 zu einem Ausgang Out, dabei ist auch eine Zuordnung auf interne Variablen möglich. Für eine aktuelle Anwendung ist das Technologische Objekt "Nocke" N1 mit genau einem Technologischen Objekt verschaltet, das den Bezugswert liefert.

Ein Bezugswert ist z.B. ist eine Achsposition. Hierbei kann das Technologische Objekt "Achse" A2 z.B. eine Positionierachse oder eine Gleichlaufachse repräsentieren. Dies ist möglich, dass eine Zuordnung des Technologischen Objektes "Nocke" N1 auf einen Ausgang Out entfallen kann, dann wirkt das Technologische Objekt "Nocke" N1 nur auf Systemvariablen am Technologischen Objekt (z.B. für die Verwendung des Technologischen Objektes als interne Nocke). Das Technologische Ob-jekt, das den Bezugswert liefert, kann mit mehreren auch unterschiedlichen Technologischen Objekten Nocken gleichzeitig verschaltet sein. Die Technologischen Objekte sind hierbei in der üblichen Notation dargestellt.

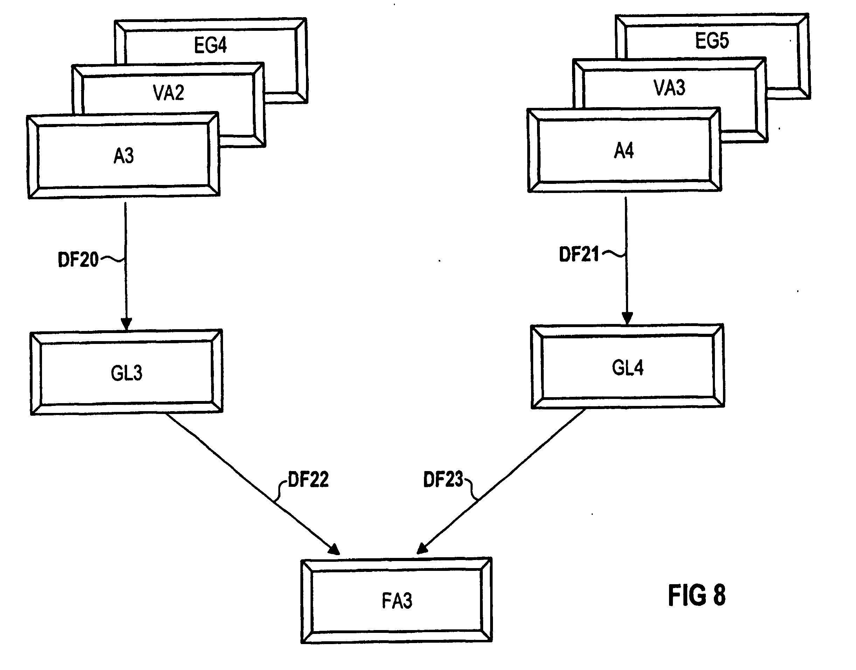

In der Darstellung gemäß FIG 8 wird gezeigt, dass ein Technologisches Objekt "Folgeachse" FA3 mit mehreren Technologischen Objekten "Gleichlauf" GL3 und GL4 verschaltet sein kann. Das Technologische Objekt "Folgeachse" FA3 ist durch den Datenflusspfeil DF22 mit dem Technologischen Objekt "Gleichlauf" GL3 und mit dem Datenflusspfeil DF23 mit dem Technologischen Objekt "Gleichlauf" GL4 verschaltet. Die Technologischen "Gleichlaufobjekte" GL3 und GL4 erhalten über die Datenflusspfeile DF20 bzw. DF21 ihre Leitwertvorgaben. In FIG 8 ist dargestellt, dass die Leitwerte für den jeweiligen Gleichlaufverbund über unterschiedliche Technologische Objekte erfolgen kann. So können für das Gleichlaufobjekt GL3 z.B. das Technologische Objekt "Achse" A3, das Technologische Objekt "virtuelle Achse" VA2 oder das Technologische Objekt "externer Geber" EG4 den Leitwert bereitstellen. Für das "Gleichlaufobjekt" GL4 kann dementsprechend der Leitwert z.B. von den Technologischen Objekten "Achse" A4, "virtuelle Achse" VA3 oder "externer Geber" EG5 bereitgestellt werden. In FIG 8 bilden dann z.B. die Technologischen Objekte "Achse" A4, "Gleichlauf" GL4 und "Folgeachse" FA3 einen Gleichlaufverband. Die jeweils gewünschte Verschaltung wird vom Anwender projektiert, die Auswahl eines projektierten Masters (der Master stellt den Leitwert für den Gleichlaufverbund zur Verfügung) kann zur Laufzeit aus dem Anwenderprogramm erfolgen, damit sind Masterumschaltungen möglich. In FIG 8 stellt das Technologische Objekt "Folgeachse" FA3 den Slave im Gleichlaufverbund dar. Die Technologischen Objekte sind hierbei in der üblichen Notation dargestellt.

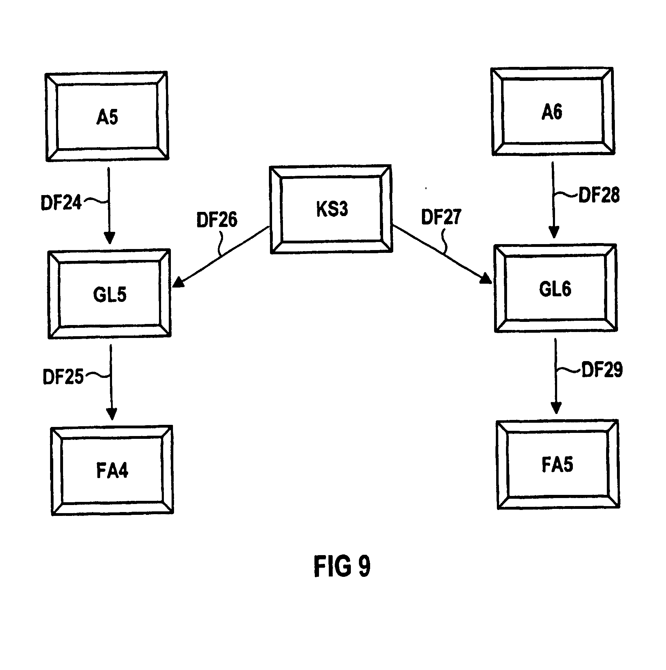

Darstellung gemäß FIG 9 zeigt ein Verschaltungsdiagramm bei dem das Technologische Objekt "Kurvenscheibe" KS3 das Getriebegesetz für zwei "Gleichlaufobjekte" GL5 und GL6 über die Datenflusspfeile DF26 bzw. DF27 bereitstellt. In FIG 9 sind somit zwei Gleichlaufverbunde dargestellt, die jeweils vom gleichen Technologischen Objekt "Kurvenscheibe" KS2 mit einem gemeinsamen Getriebegesetz versorgt werden. Die beiden Gleichlaufverbunde sind links und rechts vom Technologischen Objekt "Kurvenscheibe" KS3 angeordnet. Der linke Gleichlaufverbund wird gebildet durch das Technologische Objekt "Achse" A5, das den Leitwert bereitstellt und somit als Leitachse gilt. Es kann sich dabei z.B. um eine Positionier- oder Gleichlaufachse handeln. Das Technologische Objekt "Achse" A5 ist mit dem Datenflusspfeil DF24 mit dem "Gleichlaufobjekt" GL5 verbunden. Über diesen Datenflusspfeil DF24 wird der Leitwert bereitgestellt. Auf der Slaveseite ist das Technologische Objekt "Gleichlauf" GL5 über den Datenflusspfeil GF25 mit dem Technologischen Objekt "Folgeachse" FA4 verbunden. Der rechte Gleichlaufverbund wird gebildet durch die Technologischen Objekte "Achse" A6, "Gleichlauf" GL6 und "Folgeachse" FA5. Die "Achse" A6 entspricht dabei der Leitachse, die "Folgeachse" FA5 repräsentiert eine Slaveachse. Die Verschaltung erfolgt hierbei über die Datenflusspfeile DF28 bzw. DF29. Weiterhin ist es möglich, das von einer Leichtachse aus eine oder mehrere Gleichlaufverbindungen über Gleichlaufobjekte konfiguriert werden. Technologische Objekte "Kurvenscheibe" können einem oder mehreren Gleichlaufobjekten zugeordnet werden. Die Zusammenstellung von Gleichlaufverbund wird vom Anwender projektiert. Projektierte Gleichlaufverbunde können wiederum als Technologische Objekte repräsentiert werden und ihre Funktionalität in anderen Applikationen wieder verwendet werden. Die Technologischen Objekte sind hierbei in der üblichen Notation dargestellt.

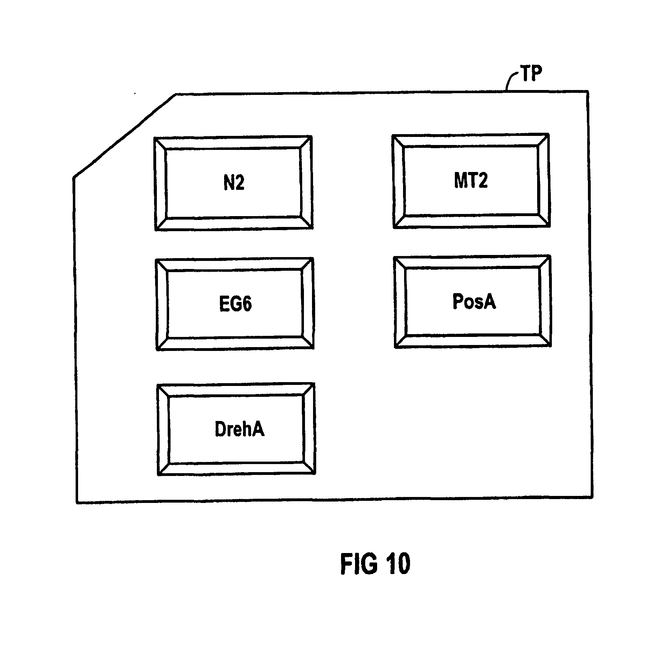

Die Darstellung gemäß FIG 10 zeigt die Zusammenfassung von mehreren Technologischen Objekten zu einem Technologiepaket TP. Das Technologiepaket TP ist dabei als Rechteck dargestellt, wobei die linke obere Ecke abgeschnitten ist. Das Technologiepaket TP enthält die Technologischen Objekte "Nocke" N2, "externer Geber" EG6, "Drehzahlachse" DrehA, "Messtaster" MT2 sowie "Positionierachse" PosA. Die Technologischen Objekte sind dabei in der üblichen Notation dargestellt. Die Technologischen Objekte repräsentieren dabei keine Instanzen, sondern Technologieobjekttypen. Ein Technologiepaket TP enthält somit eine Ansammlung von Technologieobjekttypen, die gewisse Funktionalitäten repräsentieren. Die Zuladung von Technologischen Objekten ins Runtime-System der Steuerung und damit die funktionelle Erweiterung der Steuerung erfolgt über Technologiepakete. Ein Anwender kann sich bestimmte Technologiepakete TP die wiederum Technologieobjekttypen enthalten ins Runtime-System (RTS4, RTS5; FIG 2) laden und somit eine technologische Skalierung der Funktionalität der Steuerung erreichen. Weiterhin kann durch die Technologiepakete TP bei entsprechender Zuordnung von Technologieobjekttypen eine funktionelle Strukturierung erreicht werden.

## Patentansprüche

1. Industrielle Steuerung für technische Prozesse (P), insbesondere für Produktionsmaschinen, wobei
a) die Steuerung ein allgemein einsetzbares, technologieneutrales Basissystem (UMC-K) für die Steuerungsgrundfunktionalität besitzt,
b) die technologische Funktionalität der Steuerung über Technologische Objekttypen (TO1 - TOn) bereitgestellt ist,
c) die Technologischen Objekttypen zugeschnitten auf die jeweilige Applikation zu Technologischen Objekten instanziierbar sind,
**dadurch gekennzeichnet, dass**
d) die Technologischen Objekttypen (TO1 - TOn) zugeschnitten auf die jeweilige Applikation in die Steuerung ladbar sind, so dass eine technologische Skalierung hinsichtlich der Funktionalität der Steuerung durchführbar ist und
e) die Technologischen Objekttypen (TO1 - TOn) mindestens einen Objekttyp für Achsen (A1 - A6), Geber (EG1 - EG6), Nocken (N1, N2), Messtaster (MT1, MT2), Gleichlauf (GL1 - GL6) oder Kurvenscheiben (KS1 - KS3) umfassen.

2. Industrielle Steuerung nach Anspruch 1,
**dadurch gekennzeichnet,**
**dass** das Laden und die Verteilung der Technologischen Objekte (TO1 - TOn) auf unterschiedlich oder gleich performante Hardware-Systeme und/oder Laufzeitsysteme erfolgt.

3. Industrielle Steuerung nach Anspruch 2,
**dadurch gekennzeichnet,**
**dass** das Laden und die Verteilung der Technologischen Objekte (TO1 - TOn) auf unterschiedlich oder gleich performante Hardware-Systeme und/oder Laufzeitsysteme innerhalb eines Projektes erfolgt, wobei sich ein Projekt auf Daten und/oder Programme von einer oder mehreren Steuerungseinheiten bezieht.

4. Industrielle Steuerung nach einem der vorstehenden Ansprüche,
**dadurch gekennzeichnet,**
**dass** die Verteilung der Funktionalität der Technologischen Objekte (TO1 - TOn) auf miteinander in Echtzeit durch taktsynchron äquidistant kommunizierende Steuerungseinheiten erfolgt.

5. Industrielle Steuerung nach einem der vorstehenden Ansprüche,
**dadurch gekennzeichnet,**
**dass** die Funktionalität der Steuerung durch die Zuladbarkeit beliebiger Technologischer Objekte (TO1 - Ton) flexibel erweiterbar ist.

6. Industrielle Steuerung nach einem der vorstehenden Ansprüche,
**dadurch gekennzeichnet,**
**dass** die Technologischen Objekte (TO1 - Ton) Programmierinterfaces und/oder Systemvariablen und/oder Alarme enthalten.

7. Industrielle Steuerung nach einem der vorstehenden Ansprüche,
**dadurch gekennzeichnet,**
**dass** die Technologischen Objekte (TO1 - Ton) in eine Programmierumgebung integriert sind.

8. Industrielle Steuerung nach Anspruch 7,
**dadurch gekennzeichnet,**
**dass** eine Standardprogrammierumgebung verwendet wird.

9. Industrielle Steuerung nach einem der vorstehenden Ansprüche,
**dadurch gekennzeichnet,**
**dass** eine rückwirkungsfreie Programmierung eines Technologischen Objektes (TO1 - Ton) bezüglich der anderen vorhandenen Technologischen Objekte (TO1 - Ton) und des Steuerungsbasissystems, sofern nicht explizit eine Rückwirkung programmiert bzw. projektiert ist, vorgesehen ist.

10. Industrielle Steuerung nach einem der vorstehenden Ansprüche,
**dadurch gekennzeichnet,**
**dass** die Nutzung der Technologischen Objekte (TO1 - Ton) Hardware- bzw. Plattformneutral erfolgt.

11. Industrielle Steuerung nach einem der vorstehenden Ansprüche,
**dadurch gekennzeichnet,**
**dass** Technologische Objekte (TO1 - TOn) bezüglich ihrer Funktionalität zu anderen Technologischen Objekten (TO1 - TOn) hierarchische Beziehungen und/oder Datenflussbeziehungen (DF1 - DF29, DF3') aufweisen.

12. Industrielle Steuerung nach einem der vorstehenden Ansprüche,
**dadurch gekennzeichnet,**
**dass** jedes der Technologischen Objekte Konfigurationsdaten, Systemdaten, einen oder mehrere Befehle und Alarminformationen umfasst.

13. Industrielle Steuerung nach einem der vorstehenden Ansprüche,
**dadurch gekennzeichnet,**
**dass** die Technologieobjekttypen zu Technologiepaketen (TP) zusammenfassbar sind.

14. Industrielle Steuerung nach einem der vorstehenden Ansprüche,
**dadurch gekennzeichnet,**
**dass** die Programmerstellung vor Zuordnung der Hardware-Plattform erfolgt.

15. Industrielle Steuerung nach einem der vorstehenden Ansprüche,
**dadurch gekennzeichnet,**
**dass** die Anzahl der Instanziierungen von Technologieobjekttypen flexibel einstellbar ist.

16. Industrielle Steuerung nach einem der vorstehenden Ansprüche,
**dadurch gekennzeichnet,**
**dass** die Instanzen von Technologieobjekttypen auf einer oder auf mehreren Steuerungseinheiten verteilt abgelegt werden.

17. Industrielle Steuerung nach einem der vorstehenden Ansprüche,
**dadurch gekennzeichnet,**
**dass** die Befehle von Technologischen Objekten (TO1 - TOn) synchron und/oder asynchron genutzt werden.

18. Verfahren zur Erstellung einer industrielle Steuerung, mit dem folgenden Schritt:
a) Verwendung eines Basissystems (UMC-K) mit einer technologieneutralen Grundfunktionalität als Grundlage für die Steuerung,
**gekennzeichnet durch** die weiteren Schritte:
b) Auswahl und Instanziierung der für die Anwendung relevanten Technologischen Objekttypen (TO1 - TOn), wobei die Technologischen Objekttypen (TO1 - TOn) mindestens einen Objekttyp für Achsen (A1 - A6), Geber (EG1 - EG6), Nocken (N1, N2), Messtaster (MT1, MT2), Gleichlauf (GL1 - GL6) oder Kurvenscheiben (KS1 - KS3) umfassen,
c) Hinzuladen der ausgewählten Technologischen Objekttypen (TO1 - TOn) zu dem Basissystem (UMC-K), so dass eine technologische Skalierung hinsichtlich der Funktionalität der Steuerung durchführbar ist,
d) Laden der Instanziierungsinformation in die Steuerung.

19. Industrielle Steuerung nach Anspruch 18,
**gekennzeichnet durch**
die weiteren Schritte:
e) Erstellung der Anwenderprogramme (AP) unter Nutzung der instanziierten Technologischen Objekte (TO1 - TOn) und
f) Laden der Anwenderprogramme (AP) in die Steuerung.

## Claims

1. Industrial controller for technical processes (P), in particular for production machines, wherein
a) the controller has a generally usable, technology-neutral basic system (UMC-K) for the basic functionality of the controller,
b) the technological functionality of the controller is made available via technological object types (TO1 - TOn),
c) the technological object types, tailored to the particular application, can be instantiated to technological objects,
**characterised in that**
d) the technological object types (TO1 - TOn), tailored to the particular application, can be loaded into the controller, so a technological scaling in terms of the functionality of the controller can be realised, and
e) the technological object types (TO1 - TOn) comprise at least one object type for axes (A1 - A6), sensors (EG1 - EG6), cams (N1, N2), probes (MT1, MT2), synchronism (GL1 - GL5) or cam discs (KS1 - KS3).

2. Industrial controller according to claim 1,
**characterised in that**
the technological objects (TO1 - TOn) are loaded onto and distributed across hardware systems and/or run time systems with different or the same levels of performance.

3. Industrial controller according to claim 2,
**characterised in that**
the technological objects (TO1 - TOn) are loaded onto and distributed across hardware systems and/or run time systems with different or the same levels of performance within a project, a project relating to data and/or programs of one or more control units.

4. Industrial controller according to one of the preceding claims,
**characterised in that**
the functionality of the technological objects (TO1 - TOn) is distributed to control units equidistantly communicating with one another in real time in clock-controlled synchronism.

5. Industrial controller according to one of the preceding claims,
**characterised in that**
the functionality of the controller can be flexibly expanded through the capability to load arbitrary technological objects (TO1 - TOn).

6. Industrial controller according to one of the preceding claims,
**characterised in that**
the technological objects (TO1 - TOn) contain programming interfaces and/or system variables and/or alarms.

7. Industrial controller according to one of the preceding claims,
**characterised in that**
the technological objects (TO1 - TOn) are integrated into a programming environment.

8. Industrial controller according to claim 7,
**characterised in that**
a standard programming environment is used.

9. Industrial controller according to one of the preceding claims,
**characterised in that**
feedback-free programming of a technological object (TO1 - TOn) is provided with respect to the other technological objects (TO1 - TOn) present and with respect to the basic system of the controller, unless feedback is explicitly programmed or configured.

10. Industrial controller according to one of the preceding claims,
**characterised in that**
the use of the technological objects (TO1 - TOn) is hardware- and platform-neutral.

11. Industrial controller according to one of the preceding claims,
**characterised in that**
technological objects (TO1 - TOn) have hierarchical relationships and/or data flow relationships (DF1 - DF29, DF3') with other technological objects (TO1 - TOn) in respect of their functionality.

12. Industrial controller according to one of the preceding claims,
**characterised in that**
each of the technological objects comprises configuration data, system data, one or more commands and alarm information.

13. Industrial controller according to one of the preceding claims,
**characterised in that**
the technological object types can be combined to form technology packages (TP).

14. Industrial controller according to one of the preceding claims,
**characterised in that**
the program is written before the hardware platform is assigned.

15. Industrial controller according to one of the preceding claims,
**characterised in that**
the number of instantiations of technological object types can be set flexibly.

16. Industrial controller according to one of the preceding claims,
**characterised in that**
the instances of technological object types are stored in a distributed manner on one or more control units.

17. Industrial controller according to one of the preceding claims,
**characterised in that**
the commands of technological objects (TO1 - TOn) are used synchronously and/or asynchronously.

18. Method for implementing an industrial controller, comprising the following step:
a) using a basic system (UMC-K) with a technology-neutral basic functionality as the basis for the controller,
**characterised by** the further steps:
b) selecting and instantiating the technological object types (TO1 - TOn) relevant to the application, the technological object types (TO1 - TOn) comprising at least one object type for axes (a1 - A6), sensors (EG1 - EG6), cams (N1, N2), probes (MT1, MT2), synchronism (GL1 - GL6) or cam discs (KS1 - KS3),
c) loading the selected technological object types (TO1 - TOn) in addition onto the basic system (UMC-K) so that a technological scaling in terms of the functionality of the controller can be realised,
d) loading the instantiation information into the controller.

19. Industrial controller according to claim 18,
**characterised by**
the further steps:
e) generating the application programs (AP) using the instantiated technological objects (TO1 - TOn) and
f) loading the application programs (AP) into the controller.

## Revendications

1. Commande industrielle pour des processus techniques (P), notamment pour des machines de production,
a) la commande ayant un système de base (UMC-K), universellement utilisable et technologiquement neutre, pour la fonctionnalité fondamentale de commande,
b) la fonctionnalité technologique de la commande étant fournie par l'intermédiaire de types d'objets technologiques (TO1 à TOn),
c) les types d'objets technologiques pouvant être instanciés de manière adaptée à l'application respective pour donner des objets technologiques,
**caractérisée par le fait que**
d) les types d'objets technologiques (TO1 à TOn) peuvent être chargés dans la commande de manière adaptée à l'application respective de façon à pouvoir réaliser une gradation technologique du point de vue de la fonctionnalité de la commande, et
e) les types d'objets technologiques (TO1 à TOn) comprennent au moins un type d'objet pour des axes (A1 à A6), pour des transmetteurs (EG1 à EG6), pour des cames (N1, N2), pour des palpeurs de mesure (MT1, MT2), pour la synchronisation (GL1 à GL6) ou pour des disques à cames (KS1 à KS3).

2. Commande industrielle selon la revendication 1,
**caractérisée par le fait que** le chargement et la répartition des objets technologiques (TO1 à TOn) s'effectuent sur des systèmes matériels et/ou des systèmes d'exécution ayant des performances différentes ou identiques.

3. Commande industrielle selon la revendication 2,
**caractérisée par le fait que** le chargement et la répartition des objets technologiques (TO1 à TOn) s'effectuent sur des systèmes matériels et/ou des systèmes d'exécution ayant des performances différentes ou identiques à l'intérieur d'un projet, un projet se rapportant à des données et/ou des programmes d'une ou plusieurs unités de commande.

4. Commande industrielle selon l'une des revendications précédentes,
**caractérisée par le fait que** la répartition de la fonctionnalité des objets technologiques (TO1 à TOn) s'effectue sur des unités de commande communiquant entre elles en temps réel et de manière équidistante et synchrone avec une horloge.

5. Commande industrielle selon l'une des revendications précédentes,
**caractérisée par le fait que** la fonctionnalité de la commande peut être étendue de manière variable par la possibilité de charger des objets technologiques quelconques (TO1 à TOn).

6. Commande industrielle selon l'une des revendications précédentes,
**caractérisée par le fait que** les objets technologiques (TO1 à TOn) contiennent des interfaces de programmation et/ou des variables de système et/ou des alarmes.

7. Commande industrielle selon l'une des revendications précédentes,
**caractérisée par le fait que** les objets technologiques (TO1 à TOn) sont intégrés dans un environnement de programmation.

8. Commande industrielle selon la revendication 7,
**caractérisée par le fait qu'**un environnement de programmation standard est utilisé.

9. Commande industrielle selon l'une des revendications précédentes,
**caractérisée par le fait qu'**il est prévu une programmation sans rétroaction d'un objet technologique (TO1 à TOn) par rapport aux autres objets technologiques présents (TO1 à TOn) et au système fondamental de commande, dans la mesure où une rétroaction n'est pas explicitement programmée ou développée.

10. Commande industrielle selon l'une des revendications précédentes,
**caractérisée par le fait que** l'utilisation des objets technologiques (TO1 à TOn) est neutre quant au matériel ou à la plate-forme.

11. Commande industrielle selon l'une des revendications précédentes,
**caractérisée par le fait que** des objets technologiques (TO1 à TOn) ont des relations et/ou des relations de flux de données (DF1 à DF29, DF3') qui sont hiérarchiques quant à leur fonctionnalité par rapport à d'autres objets technologiques (TO1 à TOn).

12. Commande industrielle selon l'une des revendications précédentes,
**caractérisée par le fait que** chacun des objets technologiques comprend des données de configuration, des données de système, une ou plusieurs instructions et des informations d'alarme.

13. Commande industrielle selon l'une des revendications précédentes,
**caractérisée par le fait que** les types d'objets technologiques peuvent être regroupés en paquets technologiques (TP).

14. Commande industrielle selon l'une des revendications précédentes,
**caractérisée par le fait que** la création de programme s'effectue avant l'association à une plate-forme matérielle.

15. Commande industrielle selon l'une des revendications précédentes,
**caractérisée par le fait que** le nombre des instanciations de types d'objets technologiques peut être réglé de manière variable.

16. Commande industrielle selon l'une des revendications précédentes,
**caractérisée par le fait que** les instances de types d'objets technologiques sont enregistrées de manière répartie sur une ou plusieurs unités de commande.

17. Commande industrielle selon l'une des revendications précédentes,
**caractérisée par le fait que** les instructions d'objets technologiques (TO1 à TOn) sont utilisées de manière synchrone et/ou asynchrone.

18. Procédé pour la création d'une commande industrielle, comprenant l'étape suivante :
a) utilisation d'un système de base (UMC-K) avec une fonctionnalité fondamentale technologiquement neutre comme base de la commande,
**caractérisé par** les étapes supplémentaires :
b) sélection et instanciation des types d'objets technologiques (TO1 à TOn) déterminants pour l'application, les types d'objets technologiques (TO1 à TOn) comprenant au moins un type d'objet pour des axes (A1 à A6), pour des transmetteurs (EG1 à EG6), pour des cames (N1, N2), pour des palpeurs de mesure (MT1, MT2), pour la synchronisation (GL1 à GL6) ou pour des disques à cames (KS1 à KS3),
c) chargement des types d'objets technologiques sélectionnés (TO1 à TOn) en plus du système de base (UMC-K) de manière à pouvoir réaliser une gradation technologique du point de vue de la fonctionnalité de la commande,
d) chargement de l'information d'instanciation dans la commande.

19. Procédé selon la revendication 18,
**caractérisé par** les étapes supplémentaires :
e) création des programmes d'application (AP) en utilisant les objets technologiques instanciés (TO1 à TOn), et
f) chargement des programmes d'application (AP) dans la commande.
